# EUROPEAN PATENT SPECIFICATION

(11) **EP 3 039 297 B1**
(45) Date of publication and mention of the grant of the patent: **11.10.2017**
(21) Application number: 14799063.4
(22) Date of filing: 12.08.2014
(51) Int. Cl.: F04D 13/10, B22F 3/105, F04D 29/02, F04D 29/22, F04D 29/44, C22C 1/04, C22C 1/10, C22C 32/00, C22C 33/02, E21B 43/12

(54) **ELECTRICAL SUBMERSIBLE PUMP AND PUMP SYSTEM INCLUDING ADDITIVELY MANUFACTURED STRUCTURES AND METHOD OF MANUFACTURE**
ELEKTRISCHE TAUCHPUMPE UND PUMPENSYSTEM MIT ADDITIV GEFERTIGTEN STRUKTUREN UND VERFAHREN ZUR HERSTELLUNG
POMPE ÉLECTRIQUE SUBMERSIBLE ET SYSTÈME DE POMPE COMPRENANT DES STRUCTURES FABRIQUÉES PAR ADDITION DE MATIÈRE ET PROCÉDÉ DE FABRICATION

(30) Priority: 29.08.2013 US 201314013494
(43) Date of publication of application: 06.07.2016
(73) Proprietor: General Electric Company, Schenectady, NY 12345 (US)
(72) Inventor: SHILPIEKANDULA, Vijay, Niskayuna, NY 12309-1027 (US); SEARS, James William, Niskayuna, NY 12309-1027 (US); YANG, Yanzhe, Niskayuna, NY 12309-1027 (US); SUN, Hongqing, Niskayuna, NY 12309-1027 (US); GHASRIPOOR, Farshad, Glenville, NY 12302 (US)
(74) Representative: Illingworth-Law, William Illingworth
(86) International application number: PCT/US2014/050660
(87) International publication number: WO 2015/031038

(56) References cited:
- EP-A1- 1 657 317
- WO-A1-2007/089400
- US-A- 3 152 389
- US-A1- 2008 031 731
- US-A1- 2008 101 924
- US-A1- 2010 166 578

## Description

### BACKGROUND

The present disclosure relates to electric submersible pumps. More particularly, the present disclosure relates to electric submersible pumps configured to provide improved contaminant tolerance and resulting increase in life span of the pump and pump components.

Electric submersible pump systems are used in a wide variety of environments, including wellbore applications for pumping production fluids, such as water or petroleum. Electric submersible pump systems typically include, among
other components, a submersible pump that provides for the pumping of high volumes of fluid, such as for use in oil wells which produce large quantities of water, or high volume water wells and a submersible motor for operating the electric submersible pump.

A typical electric submersible pump utilizes numerous stages of diffusers and impellers, referred to as pump stages, for pumping fluid to the surface from the well. During operation, the impellers are configured to rotate within the diffusers. It is known in the art to make impellers and diffusers from a cast alloy by machining operations, such as milling, turning, etc. Examples of prior art submersible pumps are known e.g. from US 2008/0101924 A1, US 2008/0031731 A1 and US 2010/0166578 A1.

During operation of these types of submersible pumps, tolerance to contaminants in the pumped fluid, and in particular sand, is of great concern. More particularly, tolerance to contaminants in the pumped fluid is a critical functionality that can enhance the lifespan of the electric submersible pumps. If a fluid being pumped contains a significant amount of contaminants, and more particularly entrained abrasive contaminants, such as sand, the abrasive particles will abrade and/or erode the components, and in particular the pump impellers and diffusers, and thereby shortening the life of the pump. To minimize the detrimental effects of these contaminants, recent developments have provided submersible pumps that include features to reduce material loss due to contaminants. One of these features includes utilizing coatings on the component substrate, such as the cast alloy, thus providing for a harder surface area that is less susceptible to damage by the impact of these contaminants. In addition, the inclusion of other wear resistant pump components, comprised of harder material than the impeller and diffuser, may be utilized such as bearings formed of hardened material. However, inclusion of these coating and or wear resistant components is considerably more expensive than conventional pump stage components.

In the field of oil and gas, it is typical to remove a pump from a well for servicing periodically. If contaminants have abraded the pump components severely, the pump may potentially have to be removed earlier than the usual life. The cost for removing an electric submersible pump, including lost production time, can be quite expensive, particularly with regard to wells not easily accessible, such as offshore drilling wells.

Accordingly, it is desired to provide for an electric submersible pump, including conventional pump stage components having improved tolerance to contaminants, such as sand, thus providing for an increase in the lifespan of the pump. Further, there is a need for an electric submersible pump that allows continuous operation of the electric submersible pump system for an extended period of time.

### BRIEF DESCRIPTION

These and other shortcomings of the prior art are addressed by the present disclosure, which provides an electric submersible pump, an electrical submersible pump system and a method of manufacturing an electric submersible pump.

One aspect of the present disclosure resides in an electric submersible pump. The electric submersible pump comprising: a housing; at least one impeller disposed in the housing; and at least one diffuser disposed in the housing and configured in cooperative engagement with the at least one impeller. At least one of the at least one impeller and the at least one diffuser is configured as a monolithic additively manufactured structure comprised of a metal matrix composite.

Another aspect of the present disclosure resides in an electrical submersible pump system. The electrical submersible pump system comprising: an electric submersible pump; and an electric motor configured to operate the electric submersible pump. The electric submersible pump comprises: a housing; at least one impeller; and at least one diffuser. The at least one impeller and the at least one diffuser are disposed within the housing and configured in cooperative engagement. The housing, the at least one impeller, and the at least one diffuser define an internal volume within the housing, said internal volume configured to receive a fluid. At least one of the at least one impeller and the at least one diffuser is configured as a monolithic additively manufactured structure comprised of a metal matrix composite.

Yet another aspect of the disclosure resides a method of manufacturing an electric submersible pump. The method comprising: (a) forming at least one impeller disposed in a housing; and (b) forming at least one diffuser disposed in the housing and configured in cooperative engagement with the at least one impeller. At least one of the at least one impeller and the at least one diffuser is configured as a monolithic structure comprised of a metal matrix composite. At least one of steps (a) through (b) is carried out by direct metal laser sintering.

Various refinements of the features noted above exist in relation to the various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. Again, the brief summary presented above is intended only to familiarize the reader with certain aspects and contexts of the present disclosure without limitation to the claimed subject matter.

### BRIEF DESCRIPTION OF THE DRAWING FIGURES

These and other features, aspects, and advantages of the present disclosure will become better understood when the following detailed description is read with reference to the accompanying drawings in which like characters represent like parts throughout the drawings, wherein:
FIG. 1 is a side view of an electric submersible pump disposed within a wellbore in accordance with one or more embodiments shown or described herein;
FIG. 2 is a schematic sectional view of a portion of an electric submersible pump assembly in accordance with one or more embodiments shown or described herein;
FIG. 3 is a schematic sectional view of a portion of the electric submersible pump assembly of FIG. 2 in accordance with one or more embodiments shown or described herein;
FIG. 4 is an isometric view of an electric submersible pump diffuser in accordance with one or more embodiments shown or described herein;
FIG. 5 is an isometric view of an electric submersible pump impeller in accordance with one or more embodiments shown or described herein;
FIG. 6 is an enlarged view of a portion of a metal matrix composite material of an electric submersible pump component in accordance with one or more embodiments shown or described herein; and
FIG. 7 is a flowchart depicting an embodiment of an additive manufacturing method for producing the effusion plate in accordance with the present disclosure.

### DETAILED DESCRIPTION

The disclosure will be described for the purposes of illustration only in connection with certain embodiments; however, it is to be understood that other objects and advantages of the present disclosure will be made apparent by the following description of the drawings according to the disclosure. While preferred embodiments are disclosed, they are not intended to be limiting. Rather, the general principles set forth herein are considered to be merely illustrative of the scope of the present disclosure and it is to be further understood that numerous changes may be made without straying from the scope of the present disclosure.

As described in detail below, embodiments of the present disclosure provide a system and method for monolithic design and manufacture of an electric submersible pump. The present disclosure further provides embodiments of a system and method for monolithic design and manufacture of an electric submersible pump manufactured via additive manufacturing techniques. Using such techniques, the monolithic design so produced may provide improved tolerance to contaminants.

The terms "first," "second," and the like, herein do not denote any order, quantity, or importance, but rather are used to distinguish one element from another and intended for the purpose of orienting the reader as to specific components parts. Approximating language, as used herein throughout the specification and claims, may be applied to modify any quantitative representation that could permissibly vary without resulting in a change in the basic function to which it is related. The modifier "about" used in connection with a quantity is inclusive of the stated value, and has the meaning dictated by context, (e.g., includes the degree of error associated with measurement of the particular quantity). Accordingly, a value modified by a term or terms, such as "about", is not limited to the precise value specified. In some instances, the approximating language may correspond to the precision of an instrument for measuring the value.

In the following specification and the claims, the singular forms "a", "an" and "the" include plural referents unless the context clearly dictates otherwise. As used herein, the term "or" is not meant to be exclusive and refers to at least one of the referenced components being present and includes instances in which a combination of the referenced components may be present, unless the context clearly dictates otherwise. In addition, in this specification, the suffix "(s)" is usually intended to include both the singular and the plural of the term that it modifies, thereby including one or more of that term (e.g., "the impeller" may include one or more impellers, unless otherwise specified). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. Similarly, reference to "a particular configuration" means that a particular element (e.g., feature, structure, and/or characteristic) described in connection with the configuration is included in at least one configuration described herein, and may or may not be present in other configurations. In addition, it is to be understood that the described inventive features may be combined in any suitable manner in the various embodiments and configurations.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur- this distinction is captured by the terms "may" and "may be".

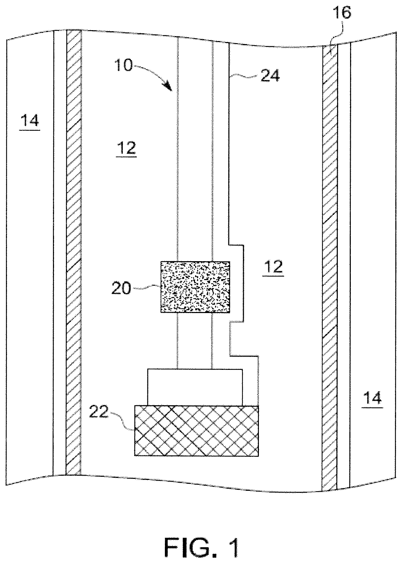

Referring to FIG. 1, an exemplary electric submersible pump (ESP) system 10 including portions manufactured via additive manufacturing techniques is illustrated wherein the ESP system is disposed within a wellbore 12. In one embodiment, the wellbore 12 is formed in a geological formation 14, for example, an oilfield. The wellbore 12 is further lined by a casing 16, as indicated in FIG. 1. In some embodiments, the casing 16 may be further perforated to allow a fluid to be pumped (referred to herein as "production fluid") to flow into the casing 16 from the geological formation 14 and pumped to the surface of the wellbore 12.

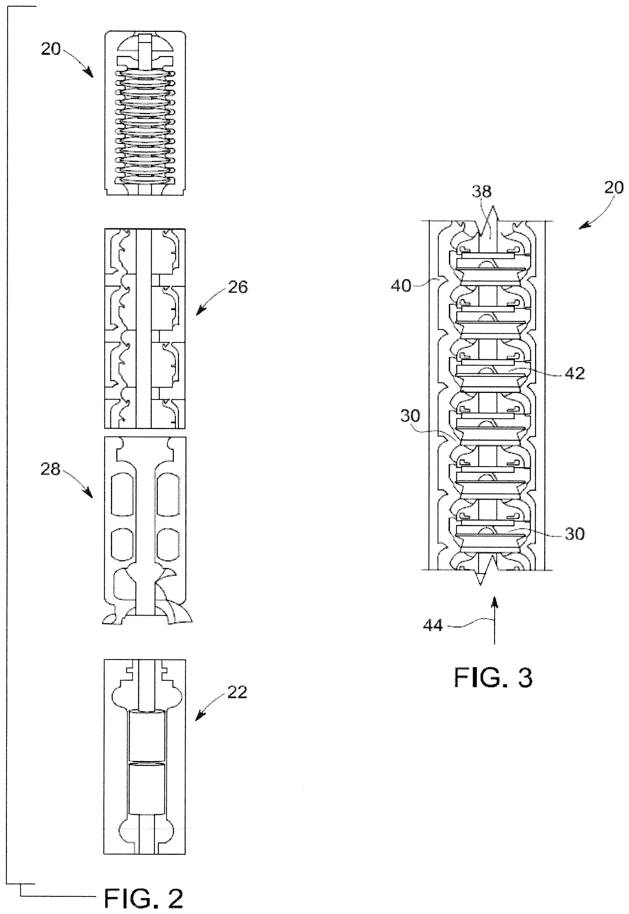

As illustrated in FIG. 1, the ESP system 10 includes an electric submersible pump 20, an electric motor 22 configured to operate the electric submersible pump 20, and an electric cable 24 configured to power the electric motor 22. As noted earlier, the ESP system 10 according to some embodiments of the invention is disposed within a wellbore 12 for continuous operation over an extended period of time. Accordingly, in such embodiments, the ESP system 10 and the components of the ESP system 10 maybe subjected to extreme conditions such as high temperatures, high pressures, and exposure to contaminants, such as sand. As further illustrated in FIG. 2, in an embodiment, the ESP system 10 further includes a gas separator 26 and
a seal28. In some embodiments, the ESP system 10 may further include additional components such as bellows or springs (not shown).

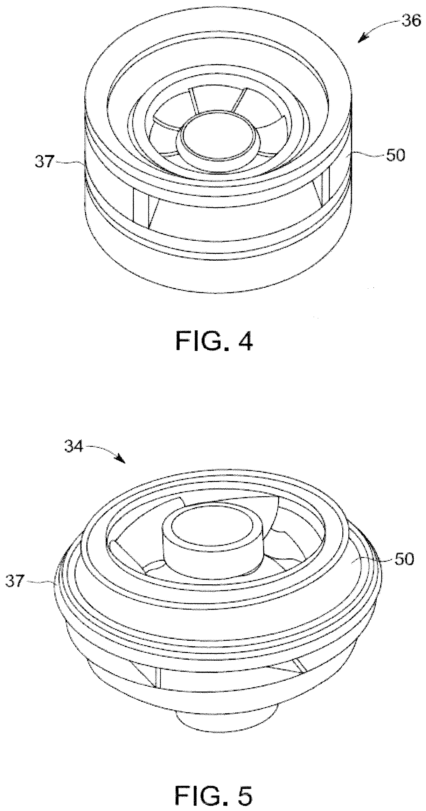

In an embodiment, the present invention provides an electric submersible pump manufactured via additive manufacturing techniques that is capable of withstanding high temperatures, high pressures, and exposure to contaminants. With reference to FIGs. 2-4, the electric submersible pump 20 according to an embodiment is a multi-stage unit with the number of stages being determined by the operating requirements. Each stage consists of a driven impeller and a diffuser manufactured via additive manufacturing techniques (described presently) which directs flow to the next stage of the pump. In an embodiment, the electrical submersible pump 20 is configured as a centrifugal pump comprising one or more pump stages 30.In the embodiment illustrated in FIG. 3, the electric submersible pump 20 is comprised of a plurality of pump stages 30. Each pump stage 30 is comprised of at least one impeller 34 and at least one diffuser 36, (as best illustrated in FIGs. 3 and 4) stacked on a common shaft 38 extending at least the length of the pump 20 and cooperatively engaged one with the other. The one or more pump stages 30, and more particularly the at least one impeller 34 and at least one diffuser 36 are disposed within a housing 40. The shaft 38 extends concentrically through the housing 40 and is rotated by the electric motor 22, thus driving the pump 20. In an embodiment, the electric submersible pump 20 may include one or more rotating impellers 34 and one or more stationary diffusers 36 that can be assembled in either floater or compression configurations to meet performance requirements.

In a particular configuration, each of the at least one impellers 34 is configured to rotate within a diffuser 36 during operation of the pump 20. The diffuser 36 is stationarily mounted within the housing 40. It has been found that the number of impellers 34 needed to produce a given flow rate at a given pressure is inversely proportional to impeller speed. More particularly, if the impeller speed is increased by a factor of 3, the number of impellers 34 can be reduced by the same ratio and produce the desired flow rate and pressure. In an embodiment, the at least one impeller 34 and the at least one diffuser 36 define an internal volume 42 within the housing 40, said internal volume 42 configured to receive a fluid 44 as indicated in FIG. 3.

In an embodiment, the internal volume 42 is configured such that there is fluid communication between the at least one impeller 34, the at least one diffuser 36 and the fluid 44 that the internal volume 42 may contain. The term "fluid communication", as used herein, means that the fluid 44 passing through the electric submersible pump 20, is in contact with the internal volume 42 of the electric submersible pump 20, and more particularly is in contact with the at least one impeller 34 and the at least one diffuser 36. Furthermore, in an embodiment, the electric submersible pump 20 and the components of the electric submersible pump 20 have a geometry and configuration such that the fluid 44 when passing through the internal volume 42 is in fluid communication with the at least one impeller 34 and the at least one diffuser 36.

FIGs. 4 and 5 illustrate embodiments of the at least one impeller 34 and the at least one diffuser 36 formed via additive manufacturing techniques. As shown in FIGs. 4 and 5, in an embodiment, each of the at least one impeller 34 and the at least one diffuser 36 are configured as a monolithic structure and comprised of a metal matrix composite 50. As used herein, the term "metal matrix composite" is comprised of a metal matrix having a ceramic material dispersed therein (described presently). These materials are inherently designed to be sand tolerant and highly resistant to other contaminant materials that may result in erosion, abrasion, and corrosion to the pump stage components. More specifically, as illustrated, at least one or both of the cooperating impeller 34 and diffuser 36 are formed as a monolithic structure, and having a single solid, uniform material makeup. During the manufacture process, the monolithic structures may be manufactured by additive manufacturing processes, such Direct Metal Laser Melting (DMLM). In general, additive manufacturing techniques involve applying a source of energy, such as a laser or electron beam, to deposited powder layers in order to grow a part having a particular shape and features.

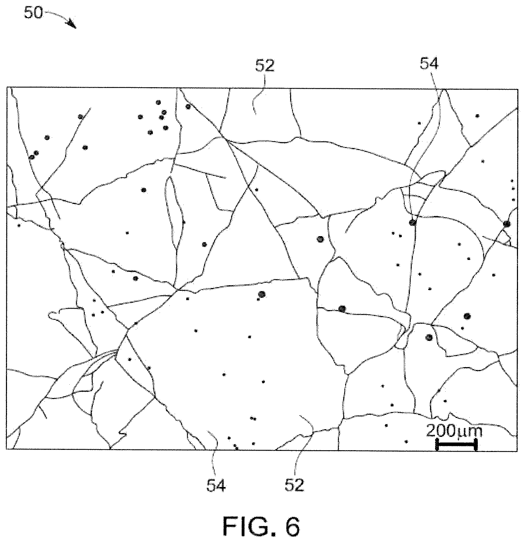

Referring now to FIG. 6, illustrated is a portion of a component according to an embodiment, and more particularly a portion of one of the impeller 34 or the diffuser 36 comprised of a metal matrix composite 50. The metal matrix composite 50 is comprised of a metal matrix 52 and a ceramic material 54.

The term "matrix" as used herein refers to a fine-grained material in which larger materials or objects are embedded. Further the term "metal matrix" as used herein refers to a metal material or a material comprised substantially of a metal material and capable of having other materials embedded therein. In one embodiment, the metal matrix 52 includes a metal in combination with a non-metal. In an embodiment, the metal matrix 52 includes a material selected from the group consisting cobalt, nickel, chromium, iron, copper and combinations thereof. In an embodiment, the metal matrix composite 50 includes the ceramic material 54 dispersed in the metal matrix 52 including chromium.

The term "ceramic" as used herein refers to an inorganic, non-metallic material having high hardness, high temperature strength, good electro-thermal insulation, and high chemical stability. Further, the term "ceramic" as used herein refers to a crystalline ceramic material or an amorphous ceramic material. In one embodiment, the ceramic material 54 includes a metal in combination with a non- metal. In one embodiment, the ceramic material 54 includes an oxide, a nitride, a boride, a carbide, a silicide, a silica, or a sulfide. In one embodiment, the ceramic material 54 includes a material selected from the group consisting of alumina, silica, aluminum silicate, zirconium oxide, mica, glass and combinations thereof. In an embodiment, the ceramic material 54 includes tungsten carbide (WC) dispersed in the metal matrix 52.

As noted above, additive manufacturing techniques generally allow for construction of custom parts having complex geometries, curvatures, and features, such as at least one impeller 34 and the at least one diffuser 36 discussed herein. Accordingly, additive manufacturing may be used to construct portions of the submersible pump having a variety of shapes and features, such as the at least one impeller 34 and the at least one diffuser 36.

Additive manufacturing may be particularly useful in the construction of at least one impeller 34 and the at least one diffuser 36 for the electric submersible pump, as the at least one impeller 34 and the at least one diffuser 36 may be constructed as a monolithic structure from high-strength materials that may be difficult to machine or tool using traditional methods. In addition, additive manufacturing techniques provide the capability to construct complex solid objects from computer models, without difficult machining steps. In general, additive manufacturing techniques involve applying a source of heat, such as a laser or electron beam, to deposited powder layers (e.g., layer after layer) in order to grow a part having a particular shape.

In the exemplary embodiment, the at least one impeller 34 and the at least one diffuser 36 are fabricated using an additive manufacturing process. Specifically, an additive manufacturing process known as direct metal laser sintering (DMLS) or direct metal laser melting (DMLM) is used to manufacture the monolithic components. Although the process is described herein as DMLS, one having ordinary skill in the art would understand that DMLM could also be used. Alternatively, the additive manufacturing method is not limited to the DMLS or DMLM process, but may be any known additive manufacturing process. This fabrication process eliminates joints that would typically be defined within the at least one impeller 34 and the at least one diffuser 36, thus making them susceptible to contaminants. Rather, DMLS is an additive layer process that produces a component directly from a CAD model using a laser and a fine metal/composite powder.

The CAD model is sliced into thin layers, and the layers are then reconstructed layer by layer, such that adjacent layers are laser fused together. The layer thickness is generally chosen based on a consideration of accuracy vs. speed of manufacture. Initially, a steel plate is typically fixed inside the DMLS machine to serve as both a support and a heat sink. A dispenser delivers the powder to the support plate and a coater arm or blade spreads the powder on the plate. The machine software controls the laser beam focus and movement so that wherever the laser beam strikes the powder, the powder forms into a solid. The process is repeated layer by layer until the fabrication of the component, and in this particular instance, the at least one impeller 34 or the at least one diffuser 36 is completed.

It will thus be appreciated that using the DMLS method permits the monolithic design and construction of the at least one impeller 34 and the at least one diffuser 36 that were previously not producible in a reliable or economical manner.

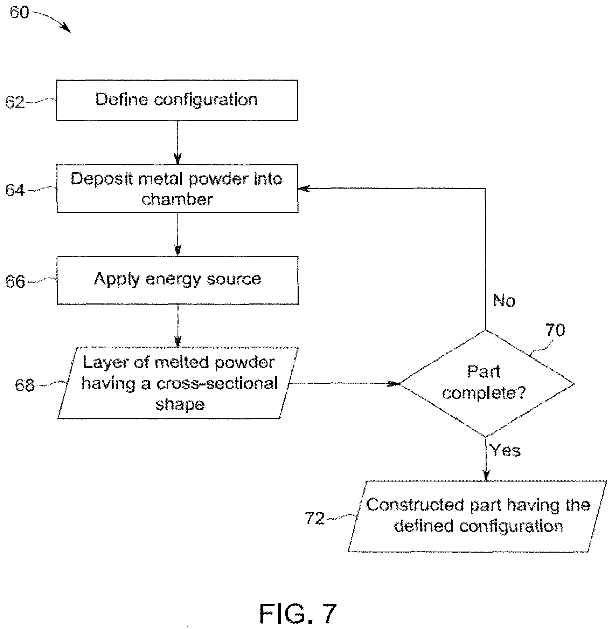

FIG. 7 is a block diagram illustrating an embodiment of a method 60 for constructing the at least one impeller 34 and the at least one diffuser 36 using additive manufacturing techniques. The method 60 may be performed by an additive manufacturing system, with the acts described herein being performed by a computer. The method 60 includes defining a particular configuration (block 62). The configuration may be programmed into an additive manufacturing system by using a specialized or general purpose computer, for example. In some embodiments, the model may be for constructing the at least one impeller 34 or the at least one diffuser
36, wherein each component has a complex shape. The defined configuration may include any of the shapes and features described above. In step 64, a powder (e.g., a metal, ceramic, or composite powder) is deposited into a chamber, such as a vacuum chamber. Any of a variety of materials may be used in any suitable combination, including those described in detail above. In step 66, an energy source, such a laser or electron beam, for example, is applied to the deposited metal powder. The laser or electron beam melts or otherwise consolidates the powder into a layer having a cross- sectional shape 68 corresponding to the configuration defined in step 62. A computer or operator may determine whether the part is incomplete or complete, in step 708. If the part is incomplete, then steps 64 and 66 are repeated to produce layers of consolidated powder having cross-sectional shapes 68 corresponding to the defined confirmation or model until construction of the part is complete. In other words, the energy source is applied to melt or otherwise consolidate each newly deposited powder layer until the final product is complete and the at least one impeller 34 and/or the at least one diffuser 36 having the defined configuration is produced.

Accordingly, disclosed is a novel electric submersible pump system, and more particularly, a novel electric submersible pump configured to provide improved contaminant tolerance and resulting increase in life span of the pump and pump components. Unlike contaminant tolerant coatings applied to metal alloy
components, the lifespan made possible through the use of components manufactured by additive manufacturing techniques and configured as monolithic structures comprised of a metal matrix composite, as disclosed herein, is much longer and not limited by thickness of coating. The resulting system and pump minimize, if not eliminate, the effects of erosion, abrasion, and corrosion on component parts.

In one embodiment, the electric motor 22 is configured to operate a pump 20 in a borehole, or wellbore 12, as indicated in FIG. 1. In one embodiment, the electric motor 22 is configured to operate an electric submersible pump 20 including the impeller 34 and the diffuser 36, as indicated in FIGs. 3-5. In one particular embodiment, at least one of the impeller 34 and the diffuser 36 is configured as a monolithic structure, or component, comprised of the metal matrix composite 50 to allow long term operation of the at least one of the impeller 34 and the diffuser 36 in the presence of contaminants, such as sand, in the wellbore 12.

In one embodiment, an ESP system 10 is provided. Referring to FIG. 1, in one embodiment, the ESP system 10 is configured to be installed in a wellbore 12. In one embodiment, the ESP system 10 is configured to be installed in a geological formation 14, such as an oilfield. In some embodiments, the ESP system 10 may be capable of pumping production fluids from a wellbore 12 or an oilfield. The production fluids may include hydrocarbons (oil) and water, for example.

In some embodiments, the ESP system 10 is installed in a geological formation 14, such as an oilfield, by drilling a hole or a wellbore 12 in a geological formation 14, for example an oilfield. The wellbore 12 maybe vertical, and may be drilled in various directions, for example, upward or horizontal. In one embodiment, the wellbore 12 is cased with a metal tubular structure referred to as the casing 16. In some embodiments, cementing between the casing 16 and the wellbore 12 may also be provided. Once the casing 16 is provided inside the wellbore 12, the casing 16 may be perforated to connect the geological formation 14 outside of the casing 16 to the inside of the casing 16. In some embodiments, an artificial lift device such as the ESP system 10 of the present disclosure may be provided to drive downhole well fluids to the surface. The ESP system 10 according to some disclosed embodiments is used in oil production to provide an artificial lift to the oil to be pumped.

An ESP system 10 may include surface components, for example, an oil platform (not shown) and sub-surface components (found in the wellbore). In one embodiment, the ESP system 10 further includes surface components such as motor controller surface cables and transformers (not shown). In one embodiment, the sub- surface components may include pumps, motor, seals, or cables.

Referring again to FIG. 1, in one embodiment, an ESP system 10 includes sub-surface components such as the electric submersible pump 20 and the electric motor 22 configured to operate the pump 20. In one embodiment, the electric motor
22 is a submersible two-pole, squirrel cage, induction electric motor. In one embodiment, the electric motor 22 is a permanent magnet motor. The motor size may be designed to lift the desired volume of production fluids. In one embodiment, the pump 22 is a multi-stage unit with the number of stages being determined by the operating requirements. In one embodiment, each stage of the electric submersible pump 20 includes a driven impeller 34 and a diffuser 36 which directs flow to the next stage of the electric submersible pump 20. On one embodiment, the electric submersible pump 20 includes a first pump stage and a second pump stage.

In one embodiment, as indicated in FIG. 1, the electric motor 20 is further coupled to an electrical power cable 24. In one embodiment, the electrical power cable 24 is coupled to the electric motor 22 by an electrical connector. In some embodiments, the electrical power cable 24 provides the power needed to power the electric motor 22 and may have different configurations and sizes depending on the application. In some embodiments, the electrical power cable 24 is designed to withstand the high-temperature wellbore environment.

Further, as noted earlier, in one embodiment, the electric submersible pump 20 includes a housing 40, the impeller 34 and the diffuser 36, the impeller 34 and the diffuser 36 are disposed within the housing 40, as indicated in FIG. 3. As noted earlier, the housing 40, the impeller 34 and the diffuser 36 define the internal volume 42 within the housing 40, said internal volume 42 containing the fluid 44, as indicated in FIG. 3.

In the disclosed embodiments, the impeller 34 and the diffuser 36 are configured as monolithic structures manufactured utilizing additive manufacturing techniques and comprised of the metal matrix composite 50, thus enabling operation in the presence of damaging contaminants, where the system 10 is exposed to these types of conditions. The metal matrix composite 50 advantageously allows for the electric submersible pump 20, and more particularly the impeller 34 and the diffuser 36 to continuously operate in environments in which contaminants are present.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have
structural elements that do not differ from the literal language of the claims, or if they include equivalent structural elements with insubstantial differences from the literal language of the claims.

## Claims

1. An electric submersible pump (20) comprising:
a housing (40);
at least one impeller (34) disposed in the housing (40); and
at least one diffuser (36) disposed in the housing (40) and configured in cooperative engagement with the at least one impeller (34), **characterised in that** at least one of the at least one impeller (34) and the at least one diffuser (36) is configured as a monolithic additively manufactured structure comprised of a metal matrix composite (50).

2. The electric submersible pump of Claim 1, wherein the housing (40), the at least one impeller (34), and the at least one diffuser (36) define an internal volume (42) within the housing (40), said internal volume (42) configured to receive a fluid (44).

3. The electric submersible pump of Claim 1, wherein the electric submersible pump (20) is configured as a centrifugal pump comprising one or more pump stages (30), wherein each of the one or more pump stages comprises an additively manufactured impeller and an additively manufactured diffuser.

4. The electric submersible pump of Claim 1, wherein the metal matrix composite (50) comprises a ceramic material (54) dispersed within a metal matrix (52).

5. The electric submersible pump of Claim 4, wherein the metal matrix (52) comprises a material selected from the group consisting of cobalt, nickel, iron, chromium and combinations thereof.

6. The electric submersible pump of Claim 4 or Claim 5, wherein the ceramic material (54) comprises a crystalline ceramic material.

7. The electric submersible pump of Claim 4, wherein the ceramic material (54) comprises an amorphous ceramic material.

8. The electric submersible pump of Claim 4, wherein the ceramic material comprises a metal in combination with a non-metal.

9. The electric submersible pump of Claim 4, wherein the ceramic material comprises at least one of an oxide, a nitride, a boride, a carbide, a silicide, a silica, or a sulfide.

10. The electric submersible pump of Claim 1, wherein the metal matrix composite (50) comprises tungsten carbide (WC) dispersed in a metal matrix.

11. The electric submersible pump of Claim 1, wherein the metal matrix composite (50) comprises tungsten carbide (WC) dispersed in a substantially chromium matrix.

12. An electrical submersible pump system, comprising:
the electric submersible pump (20) of Claim 2; and
an electric motor (22) configured to operate the electric submersible pump.

13. The electric submersible pump system of Claim 12, wherein the metal matrix composite (50) comprises a ceramic material (54) dispersed within a metal matrix (52) and wherein the ceramic material (54) comprises a material selected from the group consisting of alumina, silica, aluminum silicate, zirconium oxide, mica, glass and combinations thereof.

14. A method of manufacturing an electric submersible pump comprising: (a) forming at least one impeller (34) disposed in a housing (40); and
(b) forming at least one diffuser (36) disposed in the housing (40) and configured in cooperative engagement with the at least one impeller (34), **characterised in that** at least one of the at least one impeller (34) and the at least one diffuser (36) is configured as a monolithic structure comprised of a metal matrix composite (50), and wherein at least one of steps (a) through (b) is carried out by direct metal laser sintering.

15. The method of Claim 14, wherein direct metal laser sintering comprises defining a configuration for the at least one impeller (34) or the at least one diffuser (36), depositing a powder into a chamber, applying an energy source to the deposited powder and consolidating the powder into a cross-sectional shape corresponding to the defined configuration.

## Patentansprüche

1. Elektrische Tauchpumpe (20), umfassend:
ein Gehäuse (40);
mindestens ein Laufrad (34), das in dem Gehäuse (40) angeordnet ist; und
mindestens ein Leitrad (36), das in dem Gehäuse (40) angeordnet ist und im zusammenwirkenden Eingriff mit dem mindestens einen Laufrad (34) konfiguriert ist,
**dadurch gekennzeichnet, dass** mindestens eines von dem mindestens einen Laufrad (34) und dem mindestens einen Leitrad (36) als eine monolithische additiv gefertigte Struktur konfiguriert ist, die aus einem Metallmatrix-Verbundwerkstoff (50) besteht.

2. Elektrische Tauchpumpe nach Anspruch 1, wobei das Gehäuse (40), das mindestens eine Laufrad (34) und das mindestens eine Leitrad (36) einen Innenraum (42) innerhalb des Gehäuses (40) definieren, wobei der Innenraum (42) konfiguriert ist, ein Fluid (44) aufzunehmen.

3. Elektrische Tauchpumpe nach Anspruch 1, wobei die elektrische Tauchpumpe (20) als eine Zentrifugalpumpe konfiguriert ist, die eine oder mehrere Pumpstufen (30) umfasst, wobei jede der einen oder der mehreren Pumpstufen ein additiv gefertigtes Laufrad und ein additiv gefertigtes Leitrad umfasst.

4. Elektrische Tauchpumpe nach Anspruch 1, wobei der Metallmatrix-Verbundwerkstoff (50) ein Keramikmaterial (54) umfasst, das innerhalb einer Metallmatrix (52) dispergiert ist.

5. Elektrische Tauchpumpe nach Anspruch 4, wobei die Metallmatrix (52) ein aus der Gruppe bestehend aus Kobalt, Nickel, Eisen, Chrom und Kombinationen davon ausgewähltes Material umfasst.

6. Elektrische Tauchpumpe nach Anspruch 4 oder Anspruch 5, wobei das Keramikmaterial (54) ein kristallines Keramikmaterial umfasst.

7. Elektrische Tauchpumpe nach Anspruch 4, wobei das Keramikmaterial (54) ein amorphes Keramikmaterial umfasst.

8. Elektrische Tauchpumpe nach Anspruch 4, wobei das Keramikmaterial ein Metall in Kombination mit einem Nichtmetall umfasst.

9. Elektrische Tauchpumpe nach Anspruch 4, wobei das Keramikmaterial mindestens eines von einem Oxid, einem Nitrid, einem Borid, einem Carbid, einem Silicid oder einem Sulfid umfasst.

10. Elektrische Tauchpumpe nach Anspruch 1, wobei der Metallmatrix-Verbundwerkstoff (50) Wolframcarbid (WC) umfasst, das in einer Metallmatrix dispergiert ist.

11. Elektrische Tauchpumpe nach Anspruch 1, wobei der Metallmatrix-Verbundwerkstoff (50) Wolframcarbid (WC) umfasst, das im Wesentlichen in einer Chrommatrix dispergiert ist.

12. Elektrisches Tauchpumpensystem, umfassend:
die elektrische Tauchpumpe (20) nach Anspruch 2; und
einen Elektromotor (22), der konfiguriert ist, die elektrische Tauchpumpe zu betreiben.

13. Elektrisches Tauchpumpensystem nach Anspruch 12, wobei der Metallmatrix-Verbundwerkstoff (50) ein Keramikmaterial (54) umfasst, das innerhalb einer Metallmatrix (52) dispergiert ist, und wobei das Keramikmaterial (54) ein aus der Gruppe bestehend aus Aluminium, Siliciumdioxid, Aluminiumsilicat, Zirconiumoxid, Glimmer, Glas und Kombinationen davon ausgewähltes Material umfasst.

14. Verfahren zur Herstellung einer elektrischen Tauchpumpe, umfassend:
(a) Bilden von mindestens einem Laufrad (34), das in einem Gehäuse (40) angeordnet ist; und
(b) Bilden von mindestens einem Leitrad (36), das in dem Gehäuse (40) angeordnet ist und im zusammenwirkenden Eingriff mit dem mindestens einen Laufrad (34) konfiguriert ist,
**dadurch gekennzeichnet, dass** mindestens eines von dem mindestens einen Laufrad (34) und dem mindestens einen Leitrad (36) als eine monolithische additiv gefertigte Struktur konfiguriert ist, die aus einem Metallmatrix-Verbundwerkstoff (50) besteht, und wobei mindestens einer der Schritte (a) bis (b) durch direktes Metalllasersintern durchgeführt wird.

15. Verfahren nach Anspruch 14, wobei das direkte Metalllasersintern Definieren einer Konfiguration für das mindestens eine Laufrad (34) oder das mindestens eine Leitrad (36), Einbringen eines Pulvers in eine Kammer, Anlegen einer Energiequelle an das eingebrachte Pulver und Konsolidieren des Pulvers in eine Querschnittsform entsprechend der definierten Konfiguration umfasst.

## Revendications

1. Pompe électrique submersible (20) comprenant :
un boîtier (40) ;
au moins une hélice (34) disposée dans le boîtier (40) ; et
au moins un diffuseur (36) disposé dans le boîtier (40) et configuré en engagement de coopération avec la au moins une hélice (34),
**caractérisé en ce qu'**au moins l'un(e) de la au moins une hélice (34) et du au moins un diffuseur (36) est configuré(e) en structure monolithique à fabrication rapportée constituée d'un matériau composite à matrice métallique (50).

2. Pompe électrique submersible selon la revendication 1, dans laquelle le boîtier (40), la au moins une hélice (34) et le au moins un diffuseur (36) définissent un volume interne (42) dans le boîtier (40), ledit volume interne (42) étant configuré pour recevoir un fluide (44).

3. Pompe électrique submersible selon la revendication 1, dans laquelle la pompe électrique submersible (20) est configurée en pompe centrifuge comprenant un ou plusieurs étages de pompe (30), dans laquelle chacun des un ou plusieurs étages de la pompe comprend une hélice à fabrication rapportée et un diffuseur à fabrication rapportée.

4. Pompe électrique submersible selon la revendication 1, dans laquelle le matériau composite à phase métallique dispersée (50) comprend un matériau céramique (54) dispersé dans une matrice métallique (52).

5. Pompe électrique submersible selon la revendication 4, dans laquelle la matrice métallique (52) comprend un matériau choisi dans le groupe constitué du cobalt, du nickel, du fer, du chrome et de leurs combinaisons.

6. Pompe électrique submersible selon la revendication 4 ou la revendication 5, dans laquelle le matériau céramique (54) comprend un matériau céramique cristallin.

7. Pompe électrique submersible selon la revendication 4, dans laquelle le matériau céramique (54) comprend un matériau céramique amorphe.

8. Pompe électrique submersible selon la revendication 4, dans laquelle le matériau céramique comprend un métal en combinaison avec un non-métal.

9. Pompe électrique submersible selon la revendication 4, dans laquelle le matériau céramique comprend au moins l'un(e) d'un oxyde, d'un nitrure, d'un borure, d'un carbure, d'un siliciure, d'une silice ou d'un sulfure.

10. Pompe électrique submersible selon la revendication 1, dans laquelle le matériau composite à matrice métallique (50) comprend du carbure de tungstène (WC) dispersé dans une matrice métallique.

11. Pompe électrique submersible selon la revendication 1, dans laquelle le matériau composite à matrice métallique (50) comprend du carbure de tungstène (WC) dispersé dans une matrice sensiblement formée de chrome.

12. Système de pompe électrique submersible comprenant :
la pompe électrique submersible (20) de la revendication 2 ; et
un moteur électrique (22) configuré pour faire fonctionner la pompe électrique submersible.

13. Système de pompe électrique submersible selon la revendication 12, dans laquelle le composite à matrice métallique (50) comprend un matériau céramique (54) dispersé dans une matrice métallique (52) et dans lequel le matériau céramique (54) comprend un matériau choisi dans le groupe constitué de l'alumine, de la silice, du silicate d'aluminium, de l'oxyde de zirconium, du mica, du verre et de leurs combinaisons.

14. Procédé de fabrication d'une pompe électrique submersible comprenant :
(a) la formation d'au moins une hélice (34) disposée dans un boîtier (40) ; et
(b) la formation d'au moins un diffuseur (36) disposé dans le boîtier (40) et configuré pour s'engager par coopération avec la au moins une hélice (34),
**caractérisé en ce qu'**au moins l'un(e) de la au moins une hélice (34) et du au moins un diffuseur (36) est configuré(e) en structure monolithique constituée du composite à matrice métallique (50), et dans lequel au moins l'une des étapes (a) à (b) est effectuée par frittage au laser direct du métal.

15. Procédé selon la revendication 14, dans lequel le frittage direct au laser du métal comprend la définition d'une configuration pour la au moins une hélice (34) ou le au moins un diffuseur (36), le dépôt d'une poudre dans une chambre, l'application d'une source d'énergie à la poudre déposée et la consolidation de la poudre sous une forme en coupe transversale correspondant à la configuration définie.
